# EUROPÄISCHE PATENTSCHRIFT

(11) **EP 1 641 644 B1**
(45) Veröffentlichungstag und Bekanntmachung des Hinweises auf die Patenterteilung: **04.07.2007**
(21) Anmeldenummer: 04763010.8
(22) Anmeldetag: 18.06.2004
(51) Int. Cl.: B60H 1/00

(54) **KLIMATISIERUNGSEINRICHTUNG FÜR FAHRZEUGE SOWIE VERFAHREN ZUM BETREIBEN EINER KLIMATISIERUNGSEINRICHTUNG**
AIR-CONDITIONING DEVICE FOR VEHICLES AND METHOD FOR THE OPERATION OF AN AIR-CONDITIONING DEVICE
SYSTEME DE CLIMATISATION POUR VEHICULES ET PROCEDE POUR FAIRE FONCTIONNER UN SYSTEME DE CLIMATISATION

(30) Priorität: 30.06.2003 DE 10329582
(43) Veröffentlichungstag der Anmeldung: 05.04.2006
(73) Patentinhaber: Behr GmbH & Co. KG, 70469 Stuttgart (DE)
(72) Erfinder: KIEL, Ronny, 70771 Leinfelden-Oberaichen (DE); MÖLLERT, Thorsten, 70499 Stuttgart (DE); LARPENT, Stéphanie, Tokyo 162-0843 (JP)
(74) Vertreter: Grauel, Andreas
(86) Internationale Anmeldenummer: PCT/EP2004/006636
(87) Internationale Veröffentlichungsnummer: WO 2005/000613

(56) Entgegenhaltungen:
- WO-A-01/08911
- DE-A- 19 501 593
- FR-A- 2 710 878
- FR-A- 2 737 156
- FR-A- 2 765 526
- PATENT ABSTRACTS OF JAPAN Bd. 1999, Nr. 05, 31. Mai 1999 (1999-05-31) -& JP 11 048747 A (MITSUBISHI HEAVY IND LTD), 23. Februar 1999 (1999-02-23)

## Beschreibung

Die vorliegende Erfindung betrifft eine Klimatisierungseinrichtung sowie ein Verfahren zu betreiben einer Klimatisierungseinrichtung.

Gattungsgemäß zugrunde gelegte Klimatisierungseinrichtungen sind aus an Fahrzeugen bekannt. Klimatisierungseinrichtungen haben das Ziel, eine als günstig erkannte Temperaturschichtung im Fahrzeuginnenraum zu erzeugen und aufrecht zu erhalten und gleichzeitig ein verkehrssicheres Fahren des Fahrzeugs zu ermöglichen. Die zu erzeugende Luftschichtung ist vom Temperaturverlauf her so zu wählen, dass der Kopfbereich der Fahrzeuginsassen geringere Temperaturen aufweist als der Fußraum. Andererseits ist es zum Verhindern des Beschlagens insbesondere der Frontscheibe des Fahrers wünschenswert, wenn die Scheibeninnenseite einem relativ wärmeren Luftstrom ausgesetzt ist, da dieser die fahrzeuginnere Seite der Scheibe erwärmt und zugleich mehr Feuchtigkeit aufnehmen kann. Hierdurch wird ein Auftreten von Feuchtigkeitsniederschlag auf der Scheibeninnenseite verhindert bzw. sehr rasch abgebaut. Eine Beschlagtendenz kann dabei insbesondere im Regelbereich der Klimaanlage, also bei nur geringer Abweichung von der Regelvorgabe auftreten.

Um eines solche Temperaturschichtung zu erzielen und gleichzeitig einen Warmluftstrom im Frontscheibenbereich zu erreichen, ist es bekannt in einer Klimatisierungseinrichtung, einen Bypasskanal vorzusehen, der nach dem Wärmetauscher abzweigt und einen so erwärmten Luftstrom an einer den Warmluftteilstrom mit dem Kaltluftteilstrom vermischenden Mischkammer vorbei in den Defrostkanal führt. Der Defrostkanal dient dabei zum Zuleiten eines Luftstromes in die einer Fahrzeugscheibe zugeordneten Defrostdüsen. Die Mischkammer ist an sich so gestaltet, dass in ihr zwar ein Mischen der beiden Teilluftströme erfolgt, aber Bereiche gegeben sind, in denen ein höherer Anteil des Kaltluftstroms gegeben ist während in anderen Bereichen der Warmluftstromanteil erhöht ist. Je nach dem in welchem Bereich die den Fahrzeuginnenraum belüftenden Luftaustrittskanäle abzweigen, sind dennoch unterschiedliche Mischlufttemperaturen in den Luftaustrittskanälen möglich, was ein Erzeugen einer Temperaturschichtung im Fahrzeuginnenraum ermöglicht. Weiter oben im Fahrzeug mündende Luftaustrittskanäle weisen dabei geringere Mischlufttemperaturen auf als im Fußraum mündende.

Derartige Klimatisierungseinrichtungen haben den Nachteil, dass über den Bypasskanal ständig ein konstanter Warmluftstrom zu den Defrostdüsen geführt wird, der einen Luftanteil aufweist, welcher direkt hinter dem Wärmetauscher abgezweigt wurde und somit hohe Temperatur aufweist. Dieser entlang der Fahrzeugscheibe nach oben geführte Luftstrom wirkt aber einer zu erzeugenden Temperaturschichtung im Fahrzeug entgegen, die eine niedere Lufttemperatur im Kopfbereich der Fahrzeuginsassen vorsieht.

Dieser Nachteil wirkt sich insbesondere dann aus, wenn der Luftstrom, der durch die Defrostdüsen geführt wird, gering ist, also die Defrostfuntion ausgeschaltet ist und auch zum Erzeugen der Soll-Temperaturschichtung im Fahrzeuginnenraum kein großer Volumenstrom erforderlich ist. Dann ist der Anteil des Warmluftstromes am gesamten Luftstrom des Defrostkanals hoch und bestimmt weitgehend dessen Temperatur. An den Defrostdüsen tritt ein warmer Luftstrom aus, dessen Temperatur höher ist als für ein sicheres Erzeugen beschlagfreier Scheiben erforderlich ist, einem Kühlen des Fahrzeuginnenraumes entgegenwirkt und eine angestrebte Temperaturschichtung im Fahrzeuginnenraum stört.

Das Dokument DE 19501593 offenbart der Oberbegriff der Ansprüche 1 und 8.

Aufgabe der Erfindung ist es gattungsgemäß zugrunde gelegte Klimatisierungseinrichtungen dahingehend zu verbessern, dass durch das Aufrechterhalten beschlagfreier Scheiben eine gewünschte Temperaturschichtung im Fahrzeuginnenraum möglichst wenig gestört wird.

Diese Aufgabe wird bei zugrunde legen einer gattungsgemäßen Klimatisierungseinrichtung erfindungsgemäß durch eine Klimatisierungseinrichtung gemäß Anspruch 1 gelöst.

Eine Klimatisierungseinrichtung weist zum Erzeugen eines Luftstromes ein Gebläse auf. Stromabwärts dieses Gebläses ist ein Verdampfer angeordnet, an den sich ein Verteilerraum anschließt, in dem der Luftstrom mittels Steuerklappen auf einen ersten Strömungskanal und einen zweiten Strömungskanal aufteilbar ist, wodurch ein erster und einen zweiter Teilluftstrom erzeugbar ist. Der erste Strömungskanal mündet in eine Mischkammer ein, während in dem zweiten Strömungskanal ein Wärmetauscher zum Erwärmen des zweiten Teilluftstroms angeordnet ist und erst stromabwärts des Wärmetauschers in der Mischkammer mündet.

In der Mischkammer ist aus dem ersten und zweiten Teilluftstrom ein Mischluftstrom erzeugbar, wobei von der Mischkammer Luftaustrittskanäle in unterschiedliche Bereiche des Fahrzeuginnenraums führen. Mischkammerseitig sind den Luftaustrittskanälen Schaltklappen zugeordnet, welche den Luftaustrittsstrom von der Mischkammer durch den zugeordneten Luftaustrittskanal steuern. Wenigstens einer der Luftaustrittskanäle ist ein Defrostkanal, welcher dem Erzeugen eines Luftstroms unmittelbar entlang der Innenseite einer Fahrzeugscheibe des Fahrzeugs dient und an einer der Fahrzeugscheibe zugeordneten Defrostdüse austritt. Einem Defrostkanal ist wenigstens ein Bypasskanal zugeordnet, der stromabwärts des Wärmetauschers beginnend vom zweiten Strömungskanal stromaufwärts der Mischkammer abzweigt und unmittelbar in den Defrostkanal mündet und von einem Warmluftstrom durchströmbar ist.

Erfindungsgemäß ist dabei vorgesehen, dass jedem Bypasskanal eine Mischklappe zum Steuern des Warmluftstromes durch den Bypasskanal zugeordnet ist.

Durch diese Maßnahme wird erreicht, dass der Volumenstrom an Warmluft durch den Bypasskanal steuerbar ist. Somit wird der Anteil am Luftstrom durch die Defrostdüse, welcher aus dem Bypasskanal stammt, an den Betriebszustand der Klimaanlage anpassbar. Hierdurch wird es ermöglicht den Luftstrom durch den Defrostkanal gegenüber dem Luftstrom, welcher durch die Düsen austritt, welche in den oberen Bereich des Fahrzeuginnenraums einströmen, erhöht ist, diese erhöhte Temperatur gleichzeitig nicht unnötig dem Erzeugen der gewollten Temperaturschichtung im Fahrzeuginnenraum entgegenwirkt.

Gemäß einer vorteilhaften Ausgestaltung der Erfindung ist die Stellung der Mischklappe an die Stellung der den Luftstrom in den ersten und zweiten Teilluftstrom aufteilenden Steuerklappen gekoppelt. Durch diese Kopplung wird laufend ein passendes Verhältnis von Luftstrom im Bypasskanal zu dem aus der Mischkammer kommenden Luftstrom im Defrostkanal erzeugt. Dieses Verhältnis ist an die Temperaturmischung aus Warmluft und Kaltluft in der Mischkammer und somit der Temperatur in den Luftaustrittskanälen gekoppelt. Gleichzeitig ist es nicht erforderlich, für das Ermitteln einer Solistellung der Mischklappe zusätzliche Messgrößen zu erfassen und diese in einer Steuerung zu verarbeiten. Dies bewirkt ohne Einschränkung der Funktionsfähigkeit eine Minderung des mit dem Einbau einer Mischklappe verbundenen zusätzlichen Aufwandes und der Kosten.

Es entspricht einer weiteren vorteilhaften Ausgestaltung, wenn Mischklappe und Steuerklappen auf einer gemeinsamen Schwenkachse angeordnet sind. Diese Maßnahme reduziert den baulichen Aufwand, der für das zusätzliche Bereitstellen einer Mischklappe neben den Steuerklappen erforderlich ist, insbesondere die Anzahl von Durchtrittsstellen durch Wandungen, welche auch hinsichtlich der Geräuschentwicklung in der Klimatisierungseinrichtung problematisch sein können und daher besonderer Aufmerksamkeit bedürfen.

Gemäß einer vorteilhaften Ausgestaltung der Erfindung werden die wenigstens eine Mischklappe und die Steuerklappen mittels eines gemeinsamen Stellers angetrieben. Diese Maßnahme bewirkt ebenfalls eine Reduktion des mit dem-Einbau der Mischklappe verbundenen zusätzlichen Aufwandes.

Gemäß ein weiteren vorteilhaften Ausgestaltung der Erfindung ist vorgesehen, dass Mischklappe und Steuerklappen mittels eines gemeinsamen Stellers angetrieben werden, wobei zwischen Mischklappe und Steuerklappen ein Übersetzungsgetriebe angeordnet ist, derart, dass die Winkelbewegung der Mischklappe zur Winkelbewegung der Steuerklappen in einem fest vorgegebenen Verhältnis steht. Diese Maßnahme ermöglicht es die Bewegung der wenigstens einen Mischklappe an die Bewegung der Steuerklappen zu koppeln ohne dass notwendigerweise der Stellweg beider gleich groß ist. Es wird insbesondere eine Anpassung an die Durchströmung und die Abmessungen des wenigstens einen Bypasskanals, in welchem die Mischklappe angeordnet ist, ermöglicht. Dies erlaubt eine große Flexibilität in der Gestaltung und Dimensionierung von Bypasskanal und zugeordneter Mischklappe ohne dass gleichzeitig ein gesonderter Steller für Mischklappen erforderlich wird.

Es entspricht einer vorteilhaften Ausgestaltung der Erfindung, wenn der erste Strömungskanal als ein Überströmkanal bezüglich dem zweiten Strömungskanal ausgebildet ist, wobei das Verhältnis zwischen erstem und zweitem Teilluftstrom über die im Bereich des Beginns von erstem und zweitem Strömungskanal angeordneten Steuerklappen bestimmbar ist. Dabei wird gemäß der vorteilhaften Weiterbildung jeder Bypasskanal so geführt, dass er den ersten Strömungskanal durchsetzt, wobei der erste Strömungskanal insbesondere im Bereich der Steuerklappen vom Bypasskanal durchsetzt wird. Diese Anordnung ermöglicht es insbesondere die Mischklappen und die Steuerklappen unmittelbar benachbart zueinander anzuordnen. Insbesondere ist dies dann förderlich, wenn Steuerklappe und Mischklappe auf einer gemeinsamen Schwenkachse angeordnet sind und/oder mittels eines gemeinsamen Stellers angetrieben werden.

Gemäß einer weiteren vorteilhaften Ausgestaltung der Erfindung ist es vorgesehen, dass Mischklappe und Steuerklappe auf einer gemeinsamen Schwenkachse angeordnet sind, wobei sich die Mischklappe in Bereichen erstreckt, in denen der Bypasskanal verläuft, während in den übrigen Bereichen die Steuerklappe ausgebildet ist. Dies entspricht dem Wunsch nach kostengünstiger baulicher Gestaltung der Klimatisierungseinrichtung. Gemäß weirführender vorteilhafter Ausbildung kann es dabei vorgesehen sein, dass die Klappen sich in axialer Richtung der gemeinsamen Schwenkachse erstrecken und im Querschnitt hierzu gewölbt sind. Die Oberflächenwölbung der von Steuerklappen und wenigstens einer Mischklappe ermöglicht vorteilhafte konstruktiver Eigenschaften der Gestaltung der Klappen mit gleichzeitig verbesserter Führung des Luftstromes und Lage bzw. Ausrichtung von Dichtflächen zu vereinbaren. Hierbei entsprich es einer vorteilhaften Ausbildung, wenn die Klappen über sich kreissegmentförmig aufweitende, vorzugsweise auch randständig angeordnete Schwenkarme an der Schwenkachse angelenkt sind. Eine andere vorteilhafte Weiterbildung sieht vor, dass die Klappen, die als Mischklappe dienen und einem Bypasskanal zugeordnet sind, konvex gewölbt sind. Die Klappen, die als Steuerklappe dienen und der Aufteilung des Luftstromes in ersten und zweiten Teilluftstrom dienen, können gemäß Ausgestaltungen der Erfindung konkav gewölbt sein.

Ein erfindungsgemäßes Verfahren zum Betreiben einer insbesondere erfindungsgemäßen Klimatisierungseinrichtung eines Fahrzeugs, sieht vor, dass der in einem Bypasskanal einströmende Luftstrom mittels einer Luftklappe gesteuert ist, wobei der Bypasskanal in einem Strömungskanal angeordnet ist. Dabei wird gemäß vorteilhafter Ausgestaltung die Stellung der Luftklappe an die Stellung der den Luftstrom in einen ersten und zweiten Teilluftstrom aufteilenden Steuerklappen gekoppelt, wobei die Kopplung insbesondere mechanisch ausgebildet ist und die Stellbewegung vorteilhafter Weise über einen gemeinsamen Steller bewirkt wird.

Im Übrigen wird die Erfindung nachfolgend an Hand des in der Zeichnung dargestellten Ausführungsbeispiels näher erläutert, dabei zeigt:
- Fig. 1a, 1b:: Querschnittsdarstellungen durch eine erfindungsgemäße Klimatisierungseinrichtung im Bereich neben einem Bypasskanal bzw. im Bereich des Bypasskanals bei durch Steuerklappen verschlossenen ersten Strömungskanal;
- Fig. 2a, 2b:: Querschnittsdarstellungen durch eine erfindungsgemäße Klimatisieru.r₄gsein₄Ghtu-ng-_{W}aA3e-reicₕ-neben-ei-nem---Bypasskanal bzw. im Bereich des Bypasskanals bei durch Steuerklappen teilgeöffneten ersten Strömungskanal; und
- Fig. 3a, 3b:: Querschnittsdarstellungen durch eine erfindungsgemäße Klimatisierungseinrichtung im Bereich neben einem Bypasskanal bzw. im Bereich des Bypasskanals bei durch Steuerklappen verschlossenen zweiten Strömungskanal; und
- Fig. 4: in schematischer perspektivischer Darstellung ein Klappenelement, das sowohl Mischklappe als auch Steuerklappe umfasst, sowie die zugehörigen Bypasskanäle.

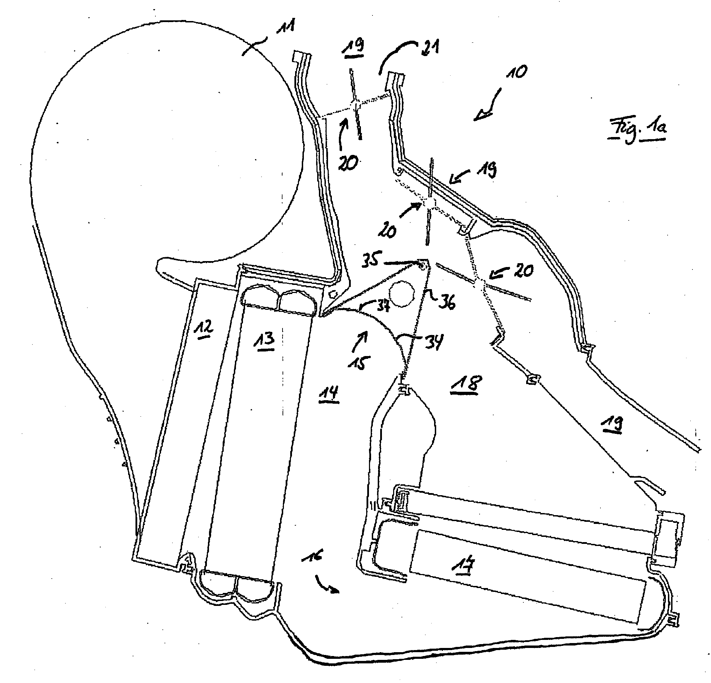

Die drei Figurenpaare der Fig. 1a,1b; 2a,2b; 3a,3b zeigen jeweils eine Schnittdarstellungung durch eine erfindungsgemäße Klimatisierungseinrichtung. Die mit a bezeichneten Figuren zeigen dabei immer einen Schnitt durch den Bereich außerhalb eines Bypasskanals, während die mit b bezeichneten Figuren den Schnitt im Bereich des Bypasskanals zeigen, wobei die Klappenstellung gleicher Figuren einander entsprechen. Die Position des Bypasskanals in der Klimatisierungseinrichtung ist wählbar. Es können auch mehr als ein Bypasskanal vorgesehen sein, wobei dann jeder Bypasskanal eine Mischklappe aufweist. Der Bypasskanal kann dabei insbesondere einseitig oder beidseitig lateral an der Klimatisierungseinrichtung oder aber mittig ausgebildet sein.

Die Figuren zeigen eine Klimatisierungseinrichtung 10 in Querschnittsdarstellung. Innerhalb des Gebläsegehäuses 11 ist ein nicht dargestelltes Gebläse, ein Radiallüfter angeordnet, der in der Senkrechten zur Schnittebene Luft ansaugt.

Die vom Radiallüfter geförderte Luft durchströmt-zunächst den Luftfilter 12 und dann den Verdampfer 13, in dem die Luft abgekühlt wird. Stromabwärts des Verdampfers 13 schließt sich der Verteilerraum 14 an. In den Bereichen, in denen sich ein Bypasskanal 30 erstreckt, verschließt eine Wandung 31 des Bypasskanals 20 den ersten Strömungskanal 15 bis auf einen Schlitz 32 durch welchen hindurch die die Mischklappe 33 geführt ist, wobei die Führung fluiddicht sein kann um Leckageströmungen zu vermeiden. In den Bereichen neben dem Bypasskanal führt der erste Strömungskanal 15 direkt in die Mischkammer 18.

Der zweite Strömungskanal 16 führt von dem Verteilerraum 14 über den Wärmetauscher 17 in die Mischkammer 18. Die in den drei Figuren in unterschiedlichen Stellungen, den beiden Endlagen und einer Zwischenstellung gezeigte Steuerklappen 34 bestimmt mit ihrer Stellung das Verhältnis zwischen dem geöffneten Strömungsquerschnitt von erstem Strömungskanal 15 zu zweitem Strömungskanal 16 und somit den Anteil des vom Verdampfer 13 kommenden Volumenstromes, der nicht über den Wärmetauscher 17 geführt wird. Damit wird die sich einstellende Temperatur der sich ergebenden Mischluft in der Mischkammer 18 gesteuert bzw. geregelt.

Von der Mischkammer 18 führen mehrere Luftaustrittskanäle 19 weg, wobei jedem dieser Kanäle eine Schaltklappe 20 zugeordnet ist, durch welche die Größe des Luftstroms in den entsprechenden Luftaustrittskanal 19 steuer- oder regelbar ist. Zum Erzielen einer Temperaturschichtung im Fahrzeug zweigen die Luftaustrittskanäle 19 an Stellen mit unterschiedlichem Mischungsverhältnis zwischen Luft aus erstem und zweitem Strömungskanal 15,16 ab, so dass unterschiedliche Temperaturen der Mischströme gegeben sind.

Einer der Luftaustrittskanäle ist der so genannte Defrostkanal 21. Dieser führt zu den Defrostdüsen welche unmittelbar im Bereich einer Scheibe, insbesondere der Frontscheibe eines Fahrzeugs angeordnet sind und dem schnellen Aufheizen der Scheibe bzw. dem Befreien der Scheibe von Beschlag durch kondensierenden Wasserdampf dient. Dabei zweigt der Defrostkanal 21 an einer Stelle ab, der einen hohen Anteil Luft aus dem ersten Strömungskanal aufweist und damit relativ kühl ist. Dies ist für die Aufheiz- und Beschlagvermeidungsfunktion hinderlich aber auch konstruktionsbedingt. Daher ist der Bypasskanal 30 vorgesehen, der im zweiten Strömungskanal 16 abzweigt und im Defrostkanal 21 direkt vor der entsprechenden Schaltklappe 20 mündet. Hierdurch wird dem Luftstrom im Defrostkanal 21 ein erhöhter Warmluftanteil zugeführt. Über die Stellung der Mischklappe 33 ist dabei der Volumenstrom durch den Defrostkanal 21 veränderbar, weil der freie Strömungsquerschnitt von der Mischklappenstellung abhängig ist. Die dem Defrostkanal 21 zugeordnete Schaltklappe 20 steuert dabei die Größe des Volumenstromes durch den Defrostkanal 21, nicht jedoch den Anteil des Volumenstromes aus dem Bypasskanal 30 darin.

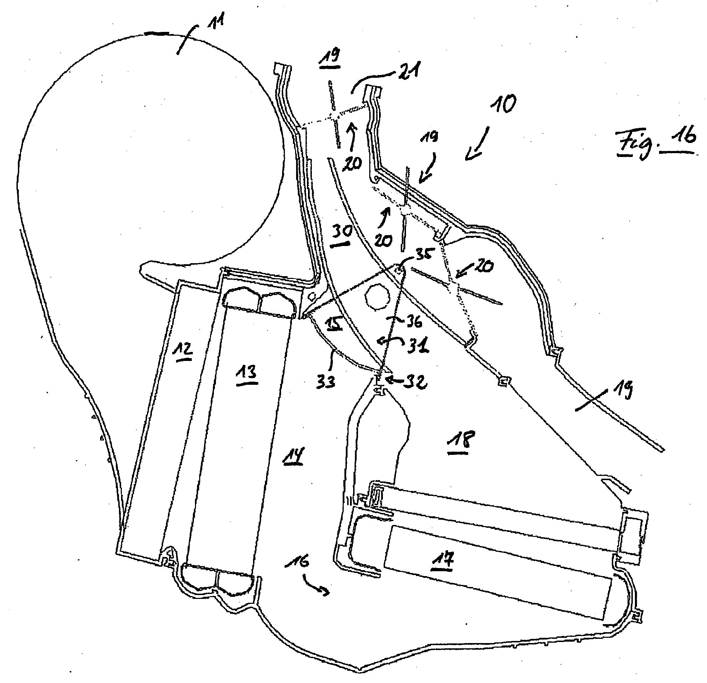

Dabei sind in der dargestellten Ausführungsform die Mischklappe 33 und die Steuerklappen 34 auf einer gemeinsamen Schenkachse 35 angeordnet, wobei die Klappen gewölbte Oberflächen 37 aufweisen und über sich radial aufweitende Schenkarme 36 an der Schwenkachse 35 angelegt sind. Die Schwenkarme 36 weisen dabei zumindest eine teilweise geschlossene Seitenfläche auf, die eine Trennfunktion zwischen Bypasskanal 30 und erstem Strömungskanal 15 hat. Somit ist die Stellung der Mischklappe 33 unmittelbar an die Stellung der Steuerklappen 34 gekoppelt und diese sind zusammen durch Verdrehen der Schwenkachse gegenüber dem Gehäuse mittels eines Stellers 38, wie in den Figuren 1 bis 3, gezeigt lageveränderbar.

Ist wie in den Fign. 1 gezeigt, der erste Strömungskanal 15 geschlossen, so wird die gesamte Luftströmung über den Wärmetauscher 17 geführt und dort erwärmt. Der Bypasskanal 30 ist dann maximal geöffnet und ein hoher Volumenstromanteil Warmluft wird dem Defrostkanal 21 zugeführt. Dies führt zu einer relativ hohen Lufttemperatur im Defrostkanal 21 und einem schnellstmöglichen Erwärmen der zugeordneten Fensterscheibe bzw. Frontscheibe und somit zu beschlag- und vereisungsfreier Scheibe.

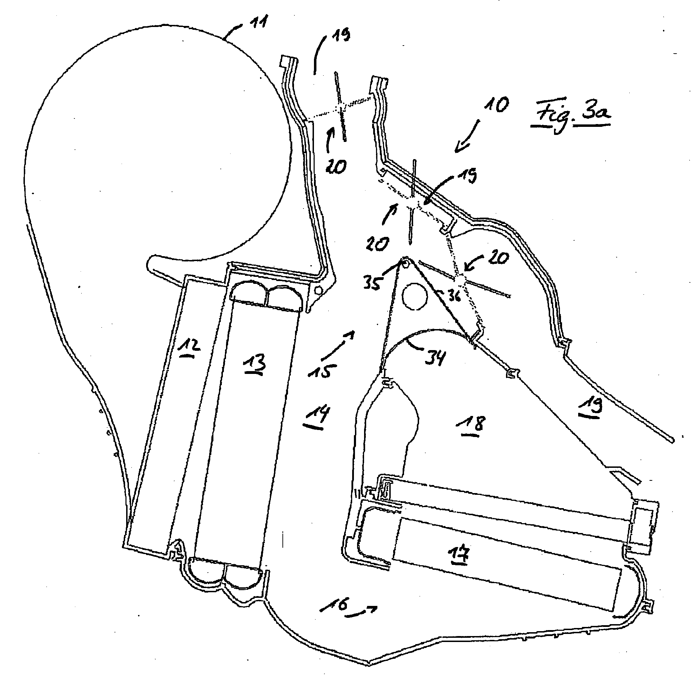

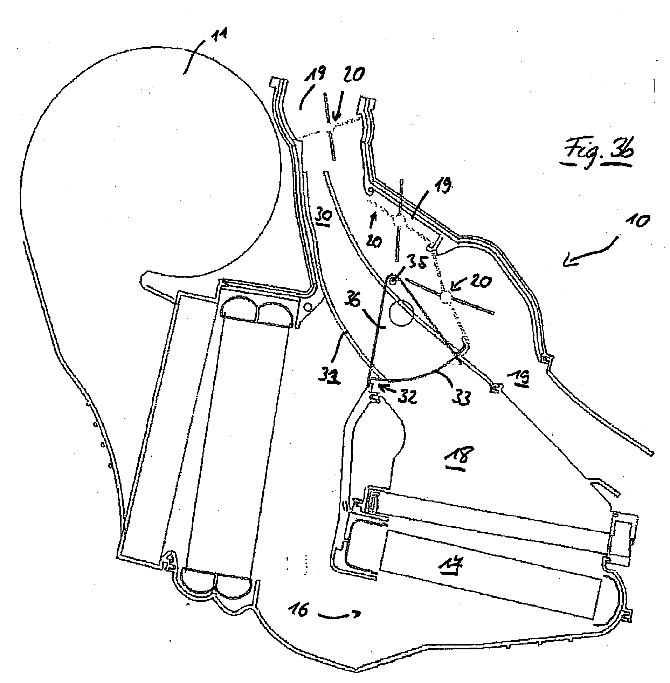

Ist wie in Fign.3 gezeigt, der erste Strömungskanal 15 geöffnet, so wird die gesamte Luftströmung über den ersten Strömungskanal 15 und damit am Wärmetauscher 17 vorbei geführt. Der Bypasskanal 30 ist dann verschlossen und dem Defrostkanal 21 wird keine erwärmte Luft aus dem Bypasskanal 30 zugeführt. Dies führt zu einer relativ-niedrigen -Lufttemperatur im Defrostkanal 21 und ein rasches Abkühlen des Innenraumes sowie das Erzeugen einer günstigen Luftschichtung im Fahrzeuginnenraum werden gefördert.

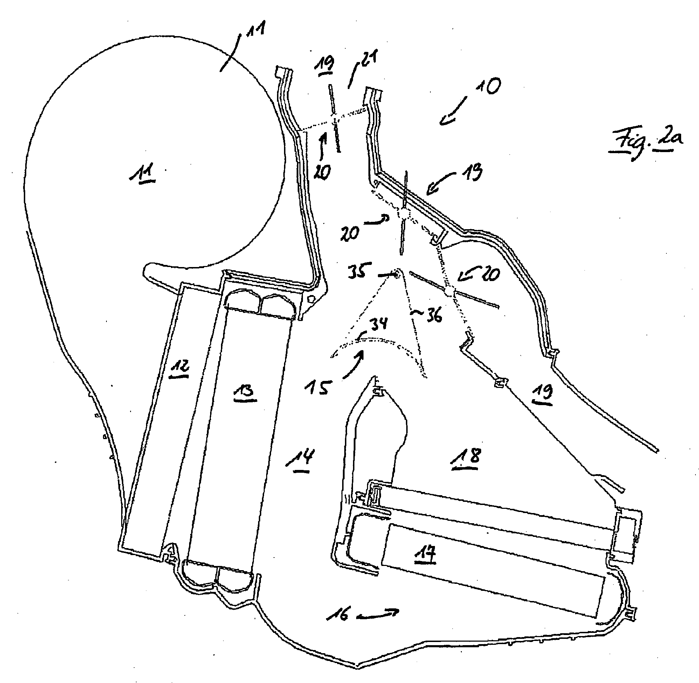

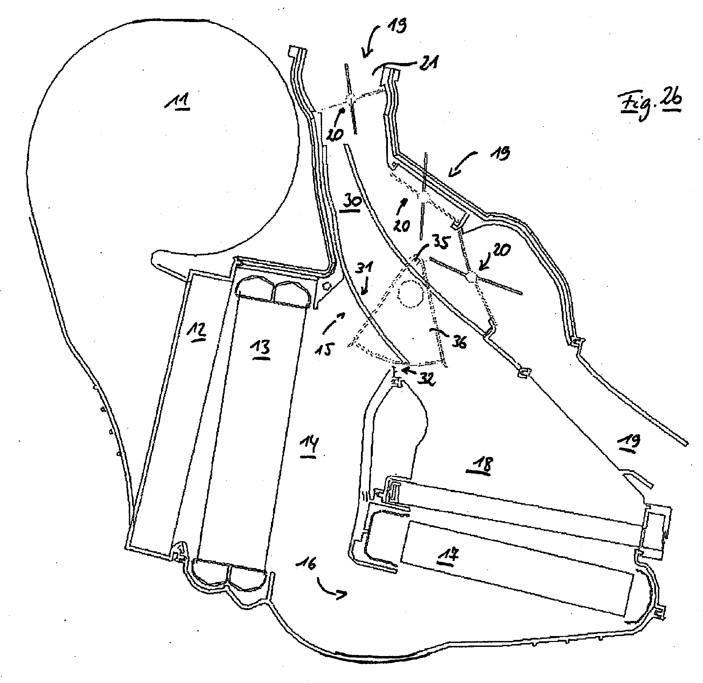

In der in Fign. 2 dargestellten Zwischenstellung werden jeweils Teilströme erzeugt. Damit wird über den Bypasskanal 30 ein geringer Warmluftvolumenstrom zum Defrostkanal 21 geführt, dieser weist zwar gegenüber der ansonsten durch ihn durchströmenden Luft eine erhöhte Temperatur auf, diese ist aber nicht so stark erhöht, wie wenn der Bypasskanal frei durchströmbar wäre. Hierdurch wird im Bereich der dem Defrostkanal 21 zugeordneten Scheibe eine erwärmte Luft zugeführt, die dennoch die Temperaturschichtung im Fahrzeug nicht unnötig stark stört. Der Grad der Erwärmung wird durch die Stärke der gewünschten Temperaturänderung beeinflusst, aus der die Stellung der Steuerklappen 34 bestimmt wird.

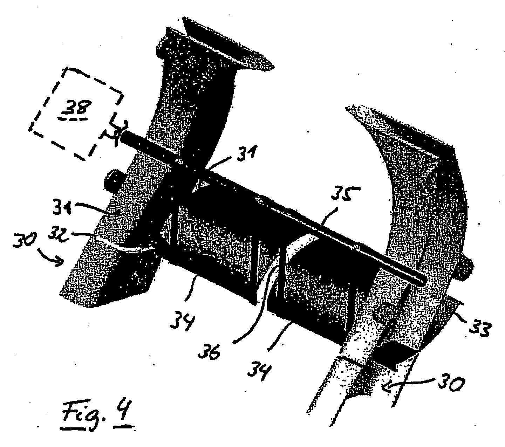

Die Figur 4 zeigt in perspektivischer Darstellung ein Klappenelement, das Mischklappe 33 und Steuerklappen 34 vereint. Dabei ist das Mischklappensegment 33 konvex gewölbt, während das Steuerklappen segment 34 konkav gewölbt ist. Die ellipsenförmige Linse zwischen Steuerklappensegment 34 und Mischklappensegment 33 bildet eine Wandung 31 die auch für die fluidische Trennung zwischen dem Bypasskanal 30 und dem ersten Strömungskanal 15 in diesem Bereich, in dem auch der Schlitz 31 im Bypasskanal 30 verläuft, sorgt. Dabei kann diese Wandung auch Teil eines sich radial nach außen weitenden Schwenkarms 36 sein. In der dargestellten Ausführungsform sind die Schwenkarme 36 jedoch als getrennt davon ausgebildete Stege ausgeführt. Die Fig. 4 zeigt dabei zwei lateral angeordnete Bypasskanäle 31, die je eine Mischklappe 33 aufweisen, wobei dazwischen sich der erste Strömungskanal 16 erstreckt, der mittels zweier darin angeordneten Steuerklappen 34 verschließbar ist. Dabei ist der Steller 38, der für das Erzeugen der Stellbewegung der Klappen zuständig ist in dieser Figur gestrichelt angedeutet. Der Steller 38 wird dabei von einer entsprechenden Steuereinheit angesteuert, durch die auch erfindungsgemäße Verfahren durchgeführt werden.

## Patentansprüche

1. Klimatisierungseinrichtung (10) für Fahrzeuge,
• mit einem Gebläse (11) zum Erzeugen eines Luftstromes,
• einem stromabwärts des Gebläses (11) angeordneten, vom Luftstrom durchströmten Verdampfer (13),
• einem dem Verdampfer (13) nachgeordneten Verteilerraum (14),
• in dem der Luftstrom mittels Steuerklappen (34) auf einen ersten Strömungskanal (15) und einen zweiten Strömungskanal (16) aufteilbar ist, wodurch ein erster und ein zweiter Teilluftstrom erzeugbar ist,
• wobei der erste Strömungskanal (15) in eine Mischkammer (18) einmündet,
• während in dem zweiten Strömungskanal (16) ein Wärmetauscher (17) zum Erwärmen des zweiten Teilluftstroms angeordnet ist und der zweite Strömungskanal (16) stromabwärts des Wärmetauschers (17) in der Mischkammer (18) mündet,
• wobei in der Mischkammer (18) aus dem ersten und zweiten Teilluftstrom ein Mischluftstrom erzeugbar ist, wobei von der Mischkammer Luftaustrittskanäle (19) in unterschiedliche Bereiche des Fahrzeuginnenraum führen, wobei mischkammerseitig Schaltklappen (20) den Luftaustrittskanälen (19) zugeordnet sind, welche den Luftaustrittsstrom von Mischkammer (18) durch den zugeordneten Luftaustrittskanal (19) steuern,
• wobei wenigstens einer der Luftaustrittskanäle (19) der Defrostkanal (21) ist, welcher dem Erzeugen eines Luftstroms unmittelbar an der Innenseite einer Fahrzeugscheibe, wie insbesondere der Frontscheibe, des Fahrzeugs dient und an eian einer der Fahrzeugscheibe zugeordneten Defrostdüse austritt,
• in welchem wenigstens ein Bypasskanal (30) angeordnet ist, der stromabwärts des Wärmetauschers (17) beginnend vom zweiten Strömungskanal (16) stromaufwärts der Mischkammer (18) abzweigt und unmittelbar in dem Defrostkanal (21) mündet und von einem Warmluftstrom durchströmbar ist und jedem Bypasskanal (30) eine Mischklappe (33) zum Steuern des Warmluftstromes durch den Bypasskanal (30) zugeordnet ist
wobei Mischklappe (33) und Steuerklappen (34) auf einer gemeinsamen Schwenkachse (35) angeordnet sind, wobei sich die Mischklappe (33) in Bereichen erstreckt, in denen der Bypasskanal (30) verläuft, während in den übrigen Bereichen die Steuerklappe (34) ausgebildet ist,
**dadurch gekennzeichnet, dass**
die Klappen (33, 34) sich in axialer Richtung der gemeinsamen Schwenkachse (35) erstrecken und im Querschnitt hierzu gewölbt sind, und die Klappen (33, 34), die als Mischklappe (33) dienen und einem Bypasskanal (30) zugeordnet sind, konvex gewölbt sind, und die Klappen (33, 34) die als Steuerklappe (34) dienen und der Aufteilung des Luftstromes in ersten und zweiten Teilluftstrom dienen, konkav gewölbt sind.

2. Klimatisierungseinrichtung nach Anspruch 1, **dadurch gekennzeichnet, dass** die Stellung der Mischklappe (33) an die Stellung der den Luftstrom in den ersten und zweiten Teilluftstrom aufteilenden Steuerklappen (34) gekoppelt ist.

3. Klimatisierungseinrichtung nach einem der vorhergehenden Ansprüche, **dadurch gekennzeichnet, dass** Mischklappe (33) und Steuerklappen mittels eines gemeinsamen Stellers (38) angetrieben werden.

4. Klimatisierungseinrichtung nach Anspruch 3, **dadurch gekennzeichnet, dass** zwischen Mischklappe (33) und Steuerklappen (34) ein Übersetzungsgetriebe angeordnet ist, derart, dass die Winkelbewegung der Mischklappe (33) zur Winkelbewegung der Steuerklappen (34) in einem festen Verhältnis steht.

5. Klimatisierungseinrichtung nach einem der vorhergehenden Ansprüche, **dadurch gekennzeichnet, dass** der erste Strömungskanal (15) als ein Überströmkanal bezüglich dem zweiten Strömungskanal (16) ausgebildet ist innerhalb dessen Verlaufs die Steuerklappen (34) angeordnet sind, wobei das Verhältnis zwischen erstem und zweitem Teilluftstrom über die im Bereich des Beginns von erstem und zweitem Strömungskanal (15, 16) angeordneten Steuerklappen (34) bestimmbar ist.

6. Klimatisierungseinrichtung nach Anspruch 5, **dadurch gekennzeichnet, dass** jeder Bypasskanal (30) so geführt ist, dass er den ersten Strömungskanal (15) durchsetzt, wobei der erste Strömungskanal (15) insbesondere im Bereich der Steuerklappen (34) vom Bypasskanal (30) durchsetzt wird.

7. Klimatisierungseinrichtung nach Anspruch 1, **dadurch gekennzeichnet, dass** die Klappen (33, 34) über sich kreissegmentförmig aufweitende, vorzugsweise auch randständig angeordnete Schwenkarme (36) an der Schwenkachse (35) angelenkt sind.

8. Verfahren zum Betreiben einer Klimatisierungseinrichtung (10) eines Fahrzeugs, insbesondere mit einer Klimatisierungseinrichtung (10) nach einem der vorhergehenden Ansprüche, mit einem in einem Strömungskanal (15) angeordneten Bypasskanal (30), **dadurch gekennzeichnet, dass** der in einen Bypass-Kanal (30) einströmende Luftstrom mittels einer Luftklappe (33) gesteuert ist.

9. Verfahren nach Anspruch 10, **dadurch gekennzeichnet, dass** die Stellung der Luftklappe (33) eines Bypass-Kanals (30) an die Stellung der den ersten und zweiten Teilluftstrom aufteilenden Steuerklappen (34) gekoppelt ist, wobei die Kopplung insbesondere mechanisch ausgebildet ist.

10. Verfahren nach Anspruch 11 **dadurch gekennzeichnet, dass** die Stellbewegung, der Luftklappe (33) durch den Steller der Steuerklappen (34) mit bewirkt wird.

## Claims

1. An air conditioning device (10) for vehicles having:
• a fan (11) for the generation of an air flow,
• an evaporator (13) positioned downstream of the fan (11) through which the air flow flows,
• a distributor chamber (14) positioned downstream of the evaporator (13)
• in which the air flow can be divided by means of control flaps (34) into a first flow channel (15) and a second flow channel (16), thereby making it possible to generate a first and a second partial air flow,
• the first flow channel (15) leading into a mixing chamber (18),
• while positioned in the second flow channel (16) is a heat exchanger (17) for heating the second partial air flow, and the second flow channel (16) opens into the mixing chamber (18) downstream of the heat exchanger (17),
• it being possible to generate a mixed air flow in the mixing chamber (18) from the first and second partial air flows, air outlet channels (19) leading from the mixing chamber to different areas of the interior of the vehicle, switching flaps (20) on the mixing chamber side being associated with the air outlet channels (19) which direct the air outlet flow from the mixing chamber (18) through the associated air outlet channel (19),
• at least one of the air outlet channels (19) being the defroster channel (21) which serves to generate an air flow directly inside vehicle window, in particular the windscreen, of the vehicle and emerges at a defroster nozzle associated with the vehicle window,
• in which is positioned at least one by-pass channel (30) which, starting downstream of the heat exchanger (17), branches off from the second flow channel (16) upstream of the mixing chamber (18) and leads directly into the defroster channel (21), and through which a flow of warm air is able to flow, there being associated which each bypass channel (30) a mixer flap (33) for directing the warm air flow through the bypass channel (30),
the mixing flap (33) and the control flaps (34) being positioned on a common axis of pivoting (35), the mixing flap (33) extending into areas in which the bypass channel (30) runs, while the control flap (34) is configured in the remaining areas,
**characterised in that**
the flaps (33, 34) extend axially in relation to the common axis of pivoting (35) and are curved in cross section in relation thereto, and the flaps (33, 34) which serve as the mixing flap (33) and are associated with a bypass channel (30) are curved convexly and the flaps (33, 34) which serve as control flaps (34) and serve to divide the air flow into a first and a second partial air flow, are concavely curved.

2. An air conditioning device in accordance with claim 1,
**characterised in that**
the position of the mixing flap (33) is linked to the position of the controlling flaps (34) which divides the air flow into the first and second partial air flows.

3. An air conditioning device in accordance with one of the preceding claims,
**characterised in that**
the mixing flap (33) and the control flaps (34) are driven by means of a common actuator (38).

4. An air conditioning device in accordance with claim 3,
**characterised in that**
there is step-up gear positioned between the mixing flap (33) and the control flaps (34) in such a manner that there is a fixed ratio between the angular movement of the mixing flap (33) and the angular movement of the control flaps (34).

5. An air conditioning device in accordance with one of the preceding claims,
**characterised in that**
the first flow channel (15) is designed as an overflow channel in relation to the second flow channel (16) within the course of which the control flaps (34) are positioned, it being possible to determine the ratio between the first and second partial air flows by means of the control flaps (34) positioned in the area of the start of the first and the second flow channels (15, 16).

6. An air conditioning device in accordance with claim 5,
**characterised in that**
each bypass channel (30) runs in such a manner that it passes through the first flow channel (15), the bypass channel (30) passing through the first flow channel (15) in particular in the area of the control flaps (34).

7. An air conditioning device in accordance with claim 1,
**characterised in that**
the flaps (33, 34) are linked to the axis of pivoting (35) by pivoting arms (36) which widen in the shape of a segment of a circle and are preferably positioned marginally.

8. A process for operating an air conditioning device (10) in a vehicle, in particular with an air conditioning device (10) in accordance with one of the preceding claims, having a bypass channel (30) positioned in a flow channel (15),
**characterised in that**
the air flow flowing into a bypass channel (30) is controlled by an air flap (33).

9. A process in accordance with claim 8,
**characterised in that**
the position of the air flap (33) in a bypass channel (30) is linked to the position of the control flaps (34) which divide the first and second partial air flows, the design of the link being in particular mechanical.

10. A process in accordance with claims 9,
**characterised in that**
the adjusting movement of the air flap (33) is effected by the actuator of the control flaps (34).

## Revendications

1. Système de climatisation (10) pour véhicules,
- avec une soufflerie (11) pour générer un flux d'air,
- un évaporateur (13) disposé en aval de la soufflerie (11) et traversé par le flux d'air,
- un espace répartiteur (14) disposé en aval de l'évaporateur (13),
- dans lequel le flux d'air peut être divisé au moyen de clapets de commande (24) en un premier conduit d'écoulement (15) et un second canal d'écoulement (16), un premier et un second flux d'air partiels étant ainsi générés,
- le premier conduit d'écoulement (15) débouchant dans une chambre de mélange (18),
- alors qu'un échangeur de chaleur (17) destiné à réchauffer le second flux d'air partiel est disposé dans le second conduit d'écoulement (16) et le second conduit d'écoulement (16) débouche en aval de l'échangeur de chaleur (17) dans la chambre de mélange (18),
- un flux d'air mixte pouvant être généré dans la chambre de mélange (18) à partir du premier et du second flux d'air partiels, des conduits de sortie d'air (19) venant de la chambre de mélange et aboutissant dans différentes zones de l'habitacle du véhicule, des clapets de commande (20) étant attribués côté chambre de mélange aux conduits de sortie d'air (19), lesquels commandent le flux de sortie d'air venant de la chambre de mélange (12) et traversant le conduit de sortie d'air (19) attribué,
- au moins l'un des conduits de sortie d'air (19) étant le conduit de dégivrage (21), qui sert à générer un flux d'air directement sur le côté intérieur d'une vitre, comme en particulier le pare-brise du véhicule et sort sur une buse de dégivrage associée à la vitre du véhicule,
- dans lequel au moins un conduit de dérivation (30) est disposé, lequel dévie en aval de l'échangeur de chaleur (17) en commençant à partir du second canal d'écoulement (16) en amont de la chambre de mélange (12) et débouche directement dans le canal de dégivrage (31) et peut: être traversé par un flux d'air chaud et un clapet de commande (33) destiné à contrôler le flux d'air chaud à travers le conduit de dérivation (30) est attribué à chaque conduit de dérivation (30),
le clapet de mélange (33) et des clapets de commande (34) étant disposés sur un axe de basculement (35) commun, le clapet de mélange (33) s'étendant dans des zones où passe le conduit de dérivation (30), alors que le clapet de commande (34) est réalisé dans les autres zones,
**caractérisé en ce que**
les clapets (33, 34) s'étendent dans la direction axiale de l'axe de pivotement (35) commun et sont incurvés en section par rapport à cet axe, et les clapets (33, 34), qui servent de clapet de mélange (33) et sont attribués à un conduit de dérivation (30), sont incurvés de façon convexe, et les clapets (33, 34), qui font office de clapet de commande (34) et servent à la répartition du flux d'air entre le premier et le second flux d'air partiels, sont incurvés de façon concave.

2. Système de climatisation selon la revendication 1, **caractérisé en ce que** la position du clapet de mélange (33) est couplée à la position des clapets de commande (34) divisant le flux d'air en premier flux d'air partiel et en second flux d'air partiel.

3. Système de climatisation selon l'une quelconque des revendications précédentes, **caractérisé en ce que** le clapet de mélange (33) et des clapets de commande sont entraînés au moyen d'un actionneur (38) commun.

4. Système de climatisation selon la revendication 3, **caractérisé en ce qu'**un engrenage de transmission est disposé entre le clapet de mélange (33) et les clapets de commande (34) de telle sorte que le mouvement angulaire du clapet de mélange (33) est dans un rapport fixe avec le mouvement angulaire des clapets de commande (34).

5. Système de climatisation selon l'une quelconque des revendications précédentes, **caractérisé en ce que** le premier conduit d'écoulement (15) est conçu comme un conduit de trop-plein par rapport au second conduit d'écoulement (16), à l'intérieur du tracé duquel les clapets de commande (34) sont disposés, le rapport entre le premier et le second flux partiels étant déterminé par les clapets de commande (34) disposés dans la zone du début du premier et du second conduits d'écoulement (15, 16).

6. Système de climatisation selon la revendication 5, **caractérisé en ce que** chaque conduit de dérivation (30) est guidé de telle sorte qu'il traverse le premier conduit d'écoulement (15), le premier conduit d'écoulement (15) étant traversé en particulier dans la zone des clapets de commande (34) par le conduit de dérivation (30).

7. Système de climatisation selon la revendication 1, **caractérisé en ce que** les clapets (33, 34) sont basculés sur l'axe de pivotement (35) au moyen de bras pivotants (36) s'élargissant en forme de segment circulaire et disposés de préférence également côté bord.

8. Procédé pour l'exploitation d'un système de climatisation (10) d'un véhicule, en particulier avec un système de climatisation (10) selon l'une quelconque des revendications précédentes, avec un conduit de dérivation (30) disposé dans un conduit d'écoulement (15), **caractérisé en ce que** le flux d'air entrant dans un conduit de dérivation (30) est commandé au moyen d'un clapet d'air (33).

9. Procédé selon la revendication 10, **caractérisé en ce que** la position du clapet d'air (33) d'un conduit de dérivation (30) est couplée à la position des clapets de commande (34) divisant le premier et le second flux d'air partiels, le couplage étant réalisé en particulier de façon mécanique.

10. Procédé selon la revendication 11, **caractérisé en ce que** le mouvement de positionnement du clapet d'air (33) est réalisé par l'actionneur des clapets de commande (34).
